# EUROPEAN PATENT SPECIFICATION

(11) **EP 4 670 954 B1**
(45) Date of publication and mention of the grant of the patent: **04.11.2026**
(21) Application number: 25173389.5
(22) Date of filing: 29.04.2025
(51) Int. Cl.: B29C 70/52, B29C 70/88

(54) **PULTRUSION PROCESS FOR MAKING A PULTRUDED PRODUCT INTENDED TO DEFINE A WALKABLE SURFACE AND PULTRUDED PRODUCT THUS OBTAINED**
PULTRUSIONSVERFAHREN ZUR HERSTELLUNG EINES PULTRUDIERTEN PRODUKTS ZUR DEFINITION EINER BEGEHBAREN OBERFLÄCHE UND SO ERHALTENES PULTRUDIERTES PRODUKT
PROCÉDÉ DE PULTRUSION POUR LA FABRICATION D'UN PRODUIT PULTRUDÉ DESTINÉ À DÉFINIR UNE SURFACE PRATICABLE ET PRODUIT PULTRUDÉ AINSI OBTENU

(30) Priority: 25.06.2024 IT 202400014560
(43) Date of publication of application: 31.12.2025
(73) Proprietor: Top Glass Industries S.p.A., 25128 Brescia BS (IT)
(72) Inventor: BRANCA, Alfonso, 20145 MILANO (IT)
(74) Representative: PGA S.p.A.

(56) References cited:
- CN-A- 116 728 845
- US-A1- 2021 261 458

## Description

### FIELD OF THE INVENTION

The present invention relates to a pultruded product, specifically a pultruded profile, having a top surface defining a walkable surface. For example, the pultruded product or profile may form a composite board or panel that can be used, either alone or in cooperation with similar boards or panels, to form a walkway or walkable surface, a surface that can be walked on by vehicles, or a scaffolding board.

The invention also relates to a process as well as equipment for making the above-mentioned pultruded product or profile.

### STATE OF THE ART

As is well known, walkable surfaces such as those mentioned above can be made of materials such as wood, plastic, or metal. While wood and plastics are perishable and therefore poorly recommended for outdoor uses, metal is easily attacked by weathering if not properly treated. In addition, both wood products and metal profiles are characterized by relatively high costs. Metal profiles are also characterized by non-indifferent specific weight thus leading to practical installation problems by having to move structures of considerable weight.

In addition, wood or metal structures are often slippery, particularly when wet. Therefore, slip-resistant elements, such as rubber strips or machining to define rough surfaces that increase surface friction even in the presence of moisture or water, must be added to the walking surfaces known today. It is evident how adding or forming on wood, plastic or metal boards anti-slip surfaces results in an additional aggravation in the overall costs of the product. Moreover, the formation or addition of anti-slip elements may not result in a completely reliable product: in fact, any added elements (strips or other) may detach with use, while any surface processing may compromise the surface continuity of the product and/or structurally weaken it. In any case, the application of additional elements or the need to carry out surface processing results in additional costs, and/or potential unreliability or deterioration of the product strength.

CN 116 728 845 A discloses the preamble of claim 1.

### PURPOSE OF THE INVENTION

It is therefore the purpose of the present invention to solve at least one of the drawbacks and/or limitations of the previous solutions.

An objective of the present invention is to make a composite pultruded product, such as a profile capable of efficiently defining a walkable surface.

It is also the purpose of the present invention to provide a pultruded product that does not require removal or application of material or additions of anti-slip elements subsequent to the formation of the product by pultrusion.

Specifically, it is an aim of the invention to make available a pultruded product and a process for its manufacture that will achieve the formation of an anti-slip treadable surface more efficiently than the known art.

A further purpose of the present invention is to conceive composite pultruded products obtainable by a continuous pultrusion process and provided with anti-slip surfaces on the profile, which should be efficient even in wet conditions.

Then, another purpose of the invention is to make available a pultrusion process and a related product in which the formation of one or more nonslip surfaces does not compromise the structural continuity of or weaken the product.

An additional purpose of the invention is to make available composite pultruded products that are capable of operating without functional problems even in aggressive environments, such as in maritime areas.

These purposes and others, which will appear more from the following description, are basically achieved by a composite pultruded product and a pultrusion process for making the same according to one or more of the appended claims and/or following aspects.

### SUMMARY

A pultrusion process and a pultruded product according to the invention are disclosed in claims 1 and 13.

### BRIEF DESCRIPTION OF THE DRAWINGS

Certain embodiments and aspects of the invention will be described below with reference to the attached drawings, which are provided for illustrative and therefore non-limiting purpose, in which:
- Figure 1 is a partially sectioned perspective view of a longitudinal portion of a pultruded product according to a variant of the present invention;
- Figure 1A is a partially sectioned perspective view of a longitudinal portion of a pultruded product according to a further variant of the present invention;
- Figure 2 is a top view of the product in Figure 1;
- Figure 2A is a top view of the product in Figure 1A;
- Figure 3 is an enlarged view of the detail highlighted with a circle in Figure 1;
- Figure 3A is an enlarged view of the detail highlighted with a circle in Figure 1A;
- Figures 4 and 5 are schematic views of pultrusion equipment for making the product according to the present invention, for example for making of the products shown in Figures 1 and 1A;
- Figure 6 is a schematic view of a tape, e.g., a woven tape, that can be used in the pultrusion equipment of Figures 4 and 5 for making a product according to the present invention, e.g., the product of Figure 1A;
- Figure 7 is a schematic view of a tape made of a plastic material, e.g., Teflon or silicone, with surface protuberances, which can be used in the pultrusion equipment shown in Figures 4 and 5, for making a product according to the present invention, e.g., the product shown in Figure 1;
- Figure 8 is a schematic view of a pavement that can be made by placing side by side pultruded products according to the invention, for example of the type shown in Figures 1, 2, 3 and 1A, 2A, 3A;
- Figure 9 is a schematic view of a table for scaffolding, wherein the table is obtainable by use of the pultruded products for example of the type in Figures 1, 2, 3 and 1A, 2A, 3A, according to further aspects of the present invention, and
- Figure 10 is a cross sectional view of a pultrusion die for making a pultruded product in accordance with the present invention.

### DEFINITIONS AND CONVENTIONS

Note that in this detailed description corresponding parts illustrated in the various figures are shown with the same numerical references. The figures may illustrate the subject matter of the invention by means of representations that are not to scale; therefore, parts and components illustrated in the figures related to the subject matter of the invention may relate only to schematic representations. The terms upstream and downstream used in the description of the pultrusion equipment and process are intended to refer to components operating upstream or downstream with respect to other components as well as to steps carried out upstream or downstream with respect to other steps with reference to the direction of advancement of the pultruded semifinished product during the pultrusion process.

In this description and in the claims, the term pultrusion includes processes in which reinforcement fibers, such as continuous fibers arranged parallel to each other or reinforcement fibers fabrics or mat reinforcement fibers or woven fibrous materials, are impregnated with resin and moved through a pultrusion die or head (which may be stationary or mobile), downstream of which an active pulling system operates on the continuous semi-finished product exiting the pultrusion die or head. In other words, the term pultrusion is used here to mean processes that include any one of the following:
- classical pultrusion,
- pull-winding,
- pull-braiding,
- combination of classical pultrusion with pull-winding,
- combination of classical pultrusion with pull-braiding,
- combination of pull-winding with pull-braiding,
- combination of classical pultrusion with pull-winding and pull-braiding.

### DETAILED DESCRIPTION

### Composite pultruded product

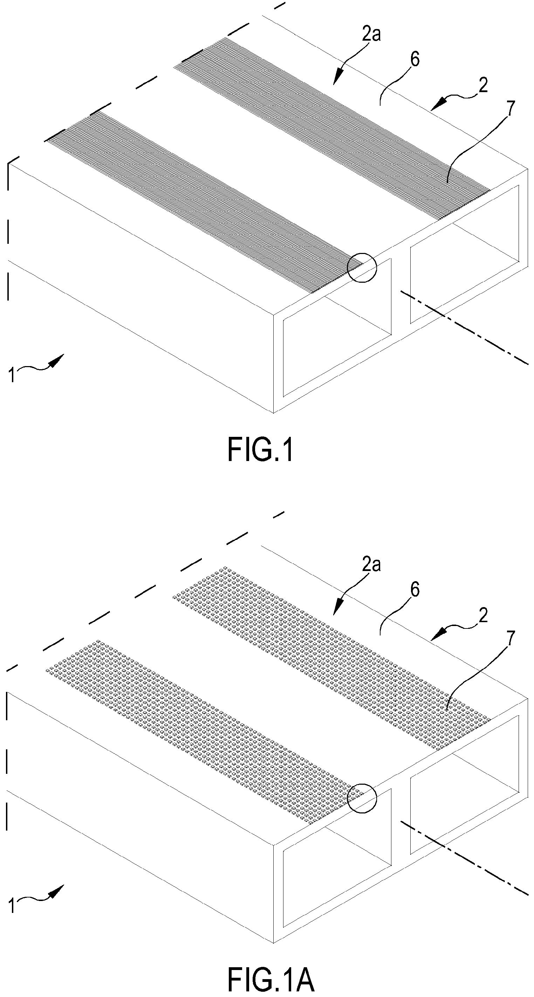

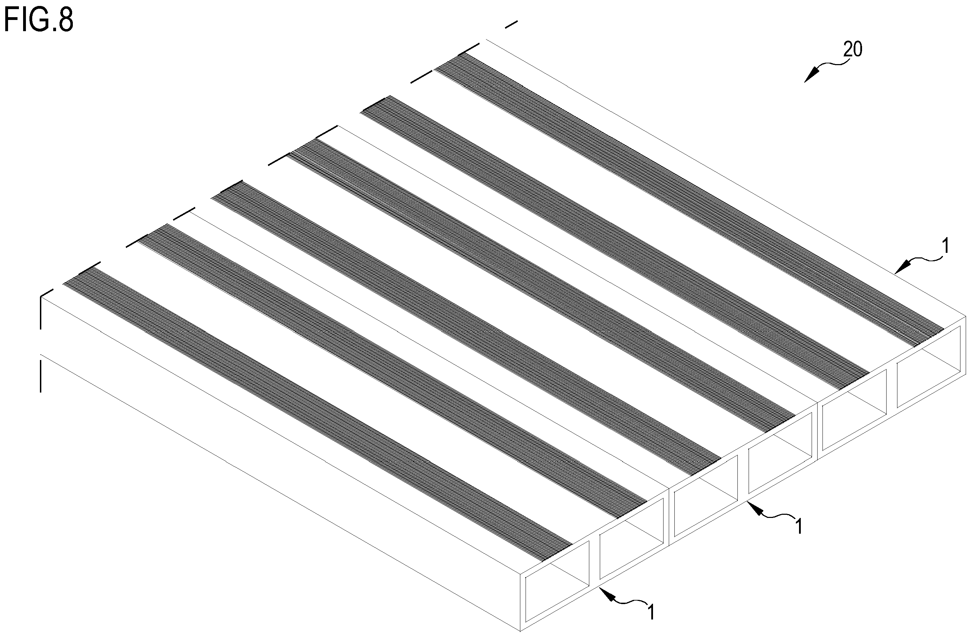

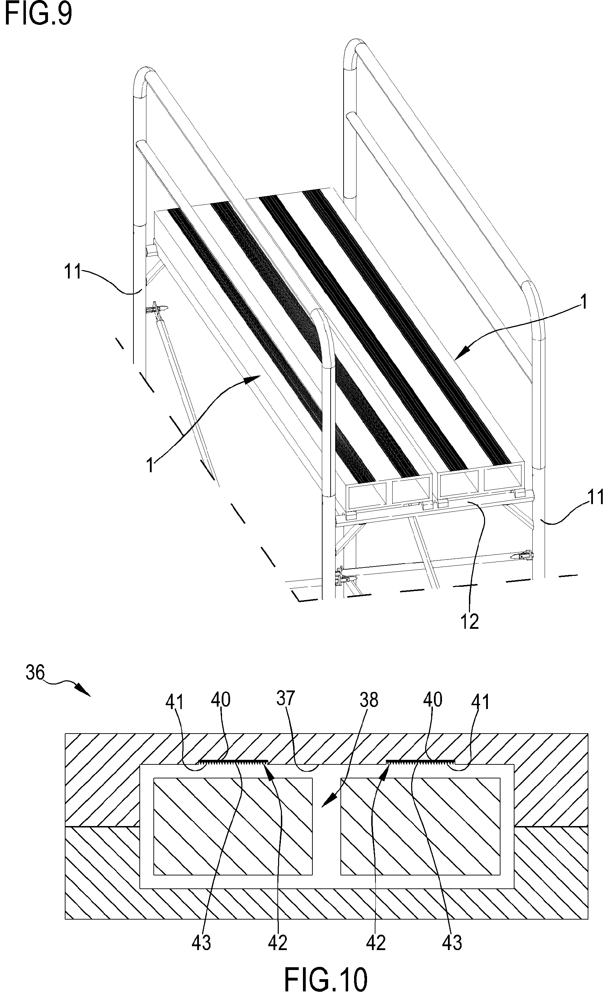

A pultruded product made of composite material (of which a longitudinal portion is shown in Figure 1), for example, which can be used to make walkable structures of various kinds, such as flooring (as shown in Figure 8), scaffold walkway boards that can be used in construction and shipbuilding (Figure 9), platforms, or others, has been collectively referred to as 1.

As, for example, shown in Figure 1, the product is in fact a profile and includes a main body 2 of elongated conformation extending along a predetermined prevailing direction of development, indicated in the figures by the X axis. In the accompanying figures, a main body 2 has been shown with a section of substantially polygonal conformation forming various closed-profile cells: however, it is not excluded that the main body might have a polygonal cross-section, e.g., square or rectangular, or an open-profile cross-section, e.g., T, H, U.

Pultruded product 1 has at least one side on which a walkable surface 2a is defined: referring to a condition of use of product or profile 1, such product or profile has an upper side where a wall of the product or profile extends longitudinally, which defines above a walkable surface 2a having the characteristics described below.

The main body 2 of the pultruded product 1 preferably has a constant cross-sectional area and comprises reinforcement fibers 3 embedded in a polymer matrix 4 obtained by solidification of liquid polymerizable resin, e.g., synthetic resin or bioresin or combinations thereof, to form a pultruded composite main body. The pultruded product 1 also has an exterior walkable surface 2a provided with a plurality of projections 5 formed by the solidification of the same polymerizable resin 4 that forms the main body 2: in other words, during the formation of the main body 2 during pultrusion of the pultruded product 1, the polymerizable resin impregnating the reinforcement fibers and forming the polymer matrix of the main body 2 also forms the projections 5 defining at least part of the exterior walkable surface of the product. In this way, these projections are joined in one piece with the polymer matrix of the main body 2, realizing a strong coupling with the latter and are not susceptible to detachment or breakage.

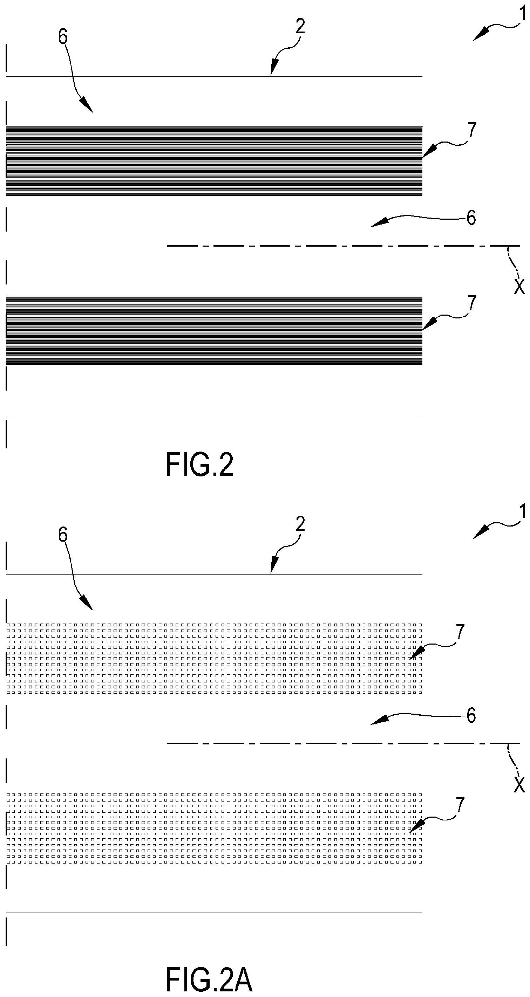

As can be seen from Figures 1, 1A and 2, 2A, the exterior walkable (or treadable) surface 2a, which in use is a top surface of the pultruded product 1, when for example used to define walkways or areas that can be walked on by people or crossed by vehicles, includes one or more zones without projections 6 and one or more zones comprising projections 7. For example, the zones comprising projections 7 are interspersed regularly and evenly with zones without projections 6. In this way, in use the treadable surface provides grip zones, i.e., zones comprising projections 7 that wedge into sole or tire surfaces realizing effective grip, interspersed with smooth zones that effectively drain water.

Going into further detail, the zones without projections 6 have a respective outer surface that is in fact formed by respective sections of the outer surface 2a of the main body: the outer surface of the zones without projections 6 is generally flat (however, it is not excluded that such a surface may be slightly curved, but in any case, smooth and without projections). On the other hand, each of the zones comprising projections 7 has a plurality of interspaced projections 5 whose ridges 8 project a distance h from the outer surface of the zones without projections 6.

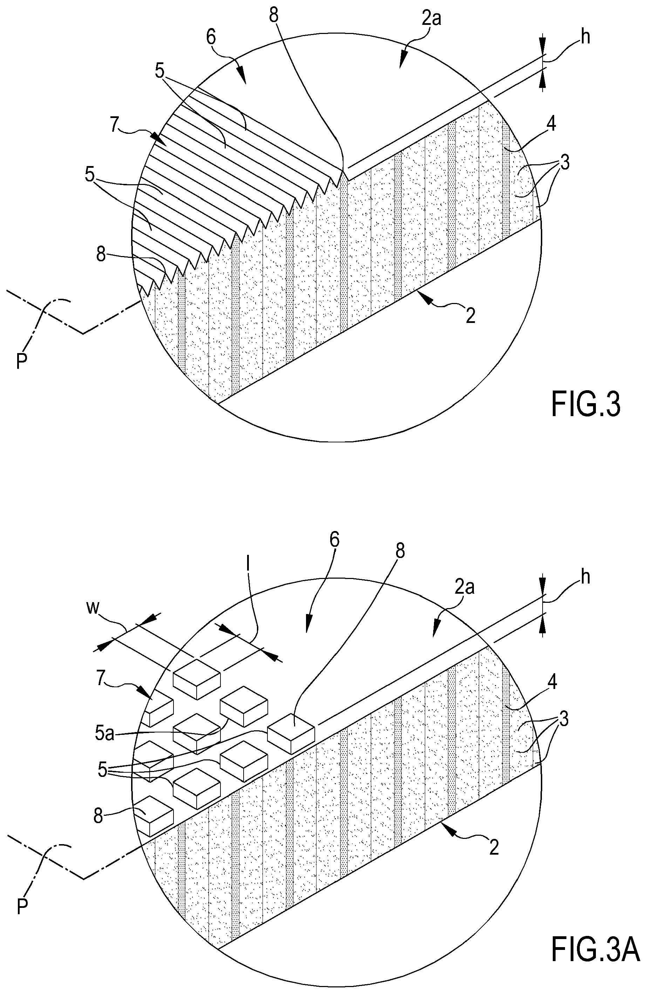

Referring in particular to the examples in Figures 3 and 3A, it can be seen that said distance h which is also the distance between the ridges of the projections 5 and an ideal plane P tangent to the outer surface of the zones without projections 6 (i.e., including the zones without projections 6 being the latter flat) is between 0.05 mm and 5 mm, optionally between 0.1 mm and 2.5 mm. In practice, the projections are attached externally and emerge with respect to the main body 2 of the pultruded profile, which remains effectively unchanged, i.e., identical to the main body of a corresponding profile without projections. This makes it possible to produce a pultruded product 1 equipped with the walking surface described above without having to redesign the profile and without compromising in any way the structural characteristics of the elongated body, which remain at least those of the same profile without projections.

With reference to Figures 1A and 3A, it is noted that in a currently preferred embodiment each of the zones comprising projections 6 has a plurality of projections 5 spaced apart; each of the projections has a respective base 5a (i.e., the area of attachment to the main body from which the projection itself emerges) lying on said ideal plane P. Each projection extends away from its respective base 5a, so that, with reference to a product use configuration in which the exterior walkable surface is laid out above, each projection extends completely above the ideal plane P (and thus, with reference to the examples illustrated, emerges as a projection from the flat top surface 2a of the main body 2). According to further aspects of the invention, it should be noted that the projections are formed exclusively of solidified polymerizable resin 4 and do not include reinforcement fibers 5. In other words, reinforcement fibers 5 are exclusively housed in the main body 2 of product 1. More in detail, the projections 5 are formed exclusively of polymerized resin resulting from the polymerization of part of the polymerizable resin 4' present in the pultrusion die 36, while an additional part of polymerizable resin present in the pultrusion die 36 forms a polymerized resin (i.., the resin matrix) reinforced with reinforcement fibers 3 defining a main body 2 of the pultruded product; the polymerized resin forming the projections 5 is joined monolithically to the polymerized resin forming the main body and does not include reinforcement fibers.

Finally, referring to the example solutions in the attached figures, the walkable surface of the pultruded product has two or more zones comprising projections 7: for example, there may be three or four or multiple zones with projections. Such zones comprising projections 7 are, for example, shaped as parallel strips of projections emerging from the, optionally flat and smooth, surface 2a of the main body 2. Of course, the plan outline of zones with projections, and consequently, of zones without projections, may be different according to requirements. For example, zones with projections with a conformation of undulating strips placed side by side or zones with projections of circular or quadrilateral conformation (e.g. arranged in a checkerboard pattern) may be provided. For example, zones with projections side by side and of different geometry in plan may be provided. In addition, the projections may have the same distance h (as defined above) or there may be zones with distance h equal to a first value and zones with distance h equal to a second value different from the first.

It should be noted that in order to give one or the other outline to the zones comprising projections (as well as to generate zones comprising projections characterized by different distances h), it is necessary to consequently change the structure of the web-shaped body or bodies used during the pultrusion process of product 1, as will be explained below.

In a form of execution shown in Figure 3A, each of the projections in zones 7 may be a discrete element conformed basically as a small tooth or a small pin: in other words, each discrete element has very small height h (as already discussed) and very limited extension, both in the longitudinal direction (i.e., length l in the direction parallel to said X-axis) and in the transverse direction (i.e., width w measured transverse to said X-axis).

Dimensionally, the height of each of said projections, i.e., the distance h between the top of the ridges of said projections and the base surface defined by the ideal plane P may be, as already mentioned, between 0.05 mm and 5 mm, optionally between 0.1 mm and 2.5 mm. As for the longitudinal extension l of each projection, it may be very limited and, for example, between 0.05 mm and 50mm, optionally between 0.1 mm and 30 mm. Similarly, the transverse extension w of each projection may also be very limited and, for example, between 0.05 mm and 50mm, optionally between 0.1 mm and 30 mm.

At the level of applications, the pultruded product 1 described above may, for example, be used as a component in a support frame 10, such as that illustrated in figure 9, which includes a plurality of uprights 11, a plurality of cross members 12 engaged to uprights 11, and a plurality of pultruded products 1 resting on cross members 12 to define a walkable walkway. A further application example of the pultruded products 1 described above may be the formation of a pavement 20 of the type shown in Figure 8: as visible, the pavement 20 comprises a plurality of pultruded products 1 arranged side by side. The pultruded products be be arranged side by side and in contact with each other, or they may be placed side by side leaving a slight gap (e.g., a few mm, specifically 1 to 10 mm) between the sides of adjacent products in order to further facilitate water drainage.

From a materials point of view, pultruded product 1 is a composite material product in which the reinforcement fibers 3 may be synthetic fibers such as carbon fiber, glass fiber, aramid fiber, Kevlar, boron fiber, or natural fibers such as natural animal fibers, basalt fibers, or natural plant fibers. Such reinforcement fibers may be partially aligned (and arranged full length) along a direction parallel to the prevailing X direction of development of the elongated body. In addition, or alternately, the fibers may be arranged in cylindrical helix-like patterns or in bands of fibers arranged at an angle to the prevailing direction of development X. Reinforcement fibers may also be in the form of woven or nonwoven fabrics.

Reinforcement fibers 3 are present product 1 in a weight percentage of 40% to 75%, optionally 55% to 65%, of the total product weight.

The polymerizable resin that may be used is for example thermosetting resin (polyester, polyurethane, vinylester, and epoxy resin), thermoplastic resin such as polybutylene terephthalate (PBT) and polyethylene terephthalate (PET).

### Pultrusion process and equipment

It is also an object of the present invention a pultrusion process for making the composite pultruded product 1 previously described and claimed below.

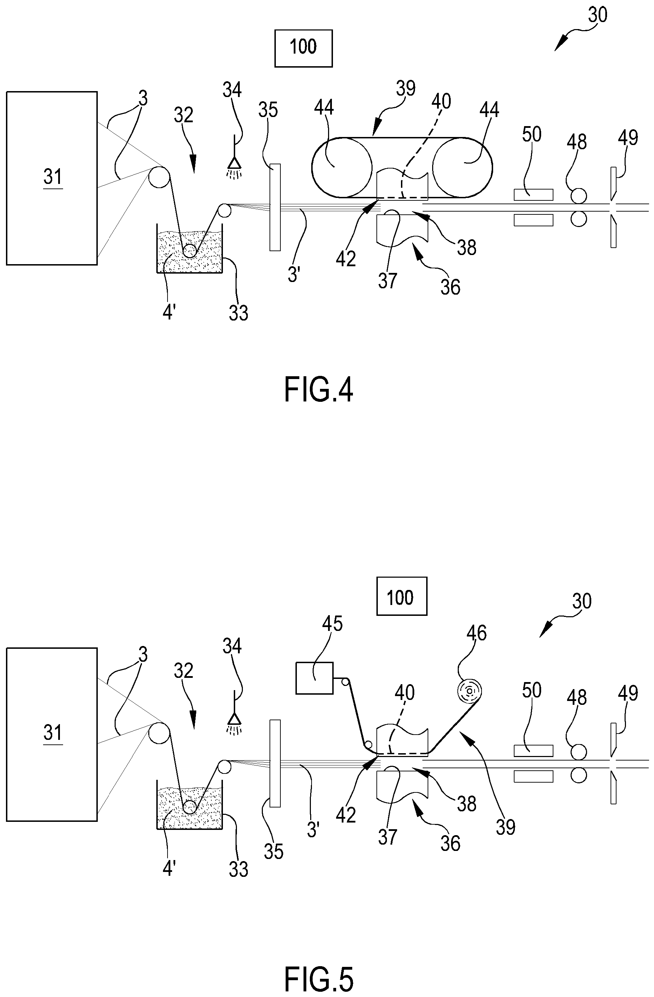

The pultrusion process described herein involves the use of a pultrusion plant or equipment 30, illustrated schematically in the two example variants of Figures 4 and 5, and comprising the components described below. In detail, the process involves feeding reinforcement fibers 3 from one or more respective feed stations 31 of the plant 30. As appropriate, the feed stations 31 may comprise one or more fiber feed spools in the form of wires or bundles of wires and/or one or more fiber feed rolls in the form of woven or nonwoven webs. Fibers from the feeding station(s) 31 are suitably guided to an impregnation station 32 in plant 30. The impregnation station 32 includes, for example, one or more tanks 33 containing liquid polymerizable resin 4' for soaking and impregnating the reinforcement fibers 3. The impregnation station (in addition or as an alternative to the tanks) may include one or more sprayers 34 of liquid polymerizable resin 4'.

At impregnation station 32, reinforcement fibers 3 are impregnated with liquid polymerizable resin forming impregnated reinforcement fibers 3'.

Next, the impregnated reinforcement fibers 3' may pass through a resin adjusting station 35 (e.g., a comb structure capable of allowing the fibers to pass through while at the same time removing excess resin or other types of resin adjusters active on fibers 3') and then are moved to a pultrusion die 36. Although only one pultrusion die is described here, it is evident that multiple pultrusion dies operating in parallel may be provided in order to produce various pultruded products or profiles simultaneously. As can be seen from Figures 4, 5, and 10, the pultrusion die 36 has an inner surface 37 delimiting at least one forming zone 38 i.e., a forming cavity inside the die that completely crosses (in a longitudinal direction parallel to the X axis of the pultruded product being formed) the pultrusion die and is intended to receive the impregnated reinforcement fibers 3'. In fact, as mentioned above, the impregnated reinforcement fibers 3' are guided to the pultrusion die 36 and pass through the forming zone 37 of the pultrusion die itself.

Simultaneously with the above steps of impregnating and feeding the impregnated reinforcement fibers to the pultrusion die, the process involves feeding to the pultrusion die 36 a web-shaped body 39 configured, as will be seen below, to form the above-described projections 5 and then form on the pultruded profile an external walkable non-slip surface 2a .

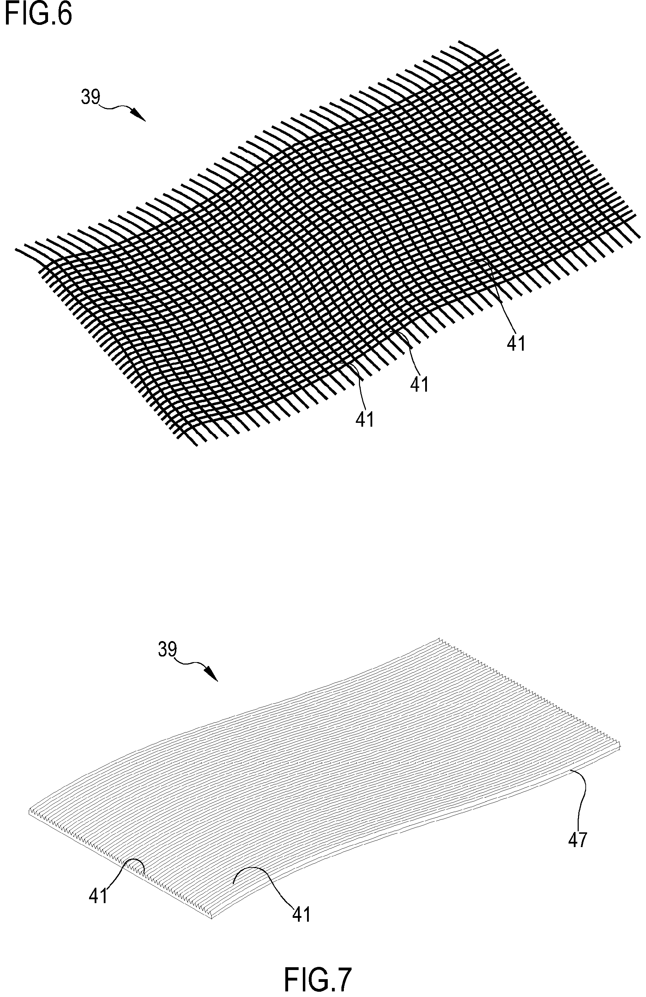

As indeed visible from Figures 4 and 5, simultaneously with the crossing of forming zone 38 by the impregnated reinforcement fibers 3', an operative tract 40 of web-shaped body 39 also crosses forming zone 38 and is arranged within the forming zone itself adjacent to the impregnated reinforcement fibers 3'; note that in Figure 10, in order to clearly show forming zone 38 and the location of the web-shaped body, the impregnated reinforcement fibers 3' and polymerizable resin (which nevertheless fill the forming zone 38 to the exclusion of the zone occupied by operative tract 40 of each web-shaped body 39) have not been shown. The web-shaped body 39 and therefore the operative tract 40 comprise a plurality of cavities 41 (see Figures 6 and 7), spaced apart from each other, facing the impregnated reinforcement fibers: as they pass through the forming cavity, the cavities 41 of the operative tract 40 of the web-shaped body 39 receive (and get filled with) resin carried by the fibers 3' and/or by other resin fed to the die 36. In other words, the cavities mentioned above receive a portion (obviously very small given the size of the cavities, which may, for example, have a volume of 0.01 to 50 mm³) of the polymerizable resin present in the pultrusion die 11. As a result of the steps described above, the pultrusion die continuously forms consecutive portions of the pultruded product; it should be noted that the liquid polymerizable resin 4' solidifies at least partially as it passes through the forming zone 38 forming, as it exits the pultrusion die, a pultruded product in a solid state. As visible from Figures 4 and 5, upon exiting the pultrusion die, the operative tract 40 of the web-shaped body 39 is separated from the pultruded product 1: as a result of the separation of the operative tract 40, the pultruded product has an exterior walkable surface (in Figures 1, 2 and 3 and in Figures 1A, 2A and 3A consisting of the top surface of the pultruded product 1) provided with a plurality of projections 5 formed by the solidification of the polymerizable resin that has occupied the spaced cavities 41 present on the operative tract (40) of the web-shaped body. The projections 5 being formed directly inside the pultrusion die 36 by the same resin 4' impregnating the reinforcement fibers 3' are joined in one piece with the rest of the pultruded product 2 forming a single body that on the one hand does not weaken the pultruded product and on the other hand realizes a firm and uniform connection between the projections and the main body of the product 1.

Going into further details of the process, it should be noted that the operative tract 40 of the web-shaped body 39, when it passes through the forming zone 38, is arranged peripherally to the reinforcement fibers 3' and in contact with a wall of the forming zone so that only one side (i.e., the side facing the inside of the pultrusion die at the forming zone and toward the impregnating fibers) directly receives the liquid polymerizable resin. As mentioned in the previous description regarding the pultruded product 1, due to the shape of the web-shaped body and the special positioning of the operative tract 40 inside the pultrusion die, a walkable surface is formed on the product that includes:
- zones without projections 6 that define a base surface, which is flat (or slightly curved) and smooth,
- zones including projections 7 (adjacent to the zones 6).

In more detail, each of the zones comprising projections has a plurality of projections spaced from each other whose ridges project from said base surface defined by the ideal plane P. The projections may be shaped and sized as described above in the section of this disclosure describing the pultruded product or profile to which reference is made to avoid repetition.

According to a further aspect, it should be noted that the operative tract 40 of the web-shaped body 39 may have a plurality of spaced cavities 41, which are mutually spaced with each other both longitudinally and transversely as shown in Figure 6. Such cavities may e.g. be of cylindrical, prismatic, conical, truncated cone, pyramidal, or truncated pyramidal conformation, so as to form on the treadable surface of the pultruded product one or more zones comprising projections each having a plurality of projections spaced longitudinally and transversely with each other and of counter-shaped conformation to that of the cavities, i.e., for example, the projections may be teeth of cylindrical, prismatic, conical, truncated cone, pyramidal conformation. In particular, when the web-shaped body 39 is formed from a fabric, the conformation of cavities 41 and consequently of projections 5 may be that of a tooth or pin of shape that may not correspond to a regular solid. In addition, the projections may not be perfectly identical to each other.

Turning now to describe a further aspect of the formation of the projections 5 in the pultruded product 1, it is noted that the inner surface 37 of the pultrusion die has a side (in the example in Figure 10 such a side is an upper side) intended to form the walkable outer surface of the pultruded product 1; this side of the inner surface 37 includes one or more indentations 42. Each of the indentations 42 extends along a preponderant part or, according to a currently preferred execution, along the entire longitudinal development of the forming zone 38 and receives the operative tract 40 of a respective web-shaped body (see Figure 10).

One flank of the operative tract 40 of each web-shaped body 39 (e.g., an upper flank) contacts a back wall 43 of a respective one of said one or more indentations 42, while an opposing flank of the operative tract 40 of each web-shaped body, facing the inside of the pultrusion die 36 )i.e., away from the back wall 43), is arranged substantially flush with the part of the inner surface 37 adjacent to the indentation. The liquid polymerizable resin present in the pultrusion die during pultrusion penetrates into the one or more indentations 42 occupying the space not occupied by the operative tract 40 of the web-shaped body thus defining the projections which are formed exclusively of solidified polymerizable resin (deriving from solidification of said liquid polymerizable resin) and do not include reinforcement fibers, which remain confined outside the indentations 42. In more detail said projections 5 are formed (in the pultruded product) exclusively of polymerized resin resulting from the polymerization of part of the polymerizable resin 4' present in the pultrusion, while an additional part of polymerizable resin (most of it actually) present in the pultrusion die 36 forms a polymerized resin reinforced with reinforcement fibers 3 that defines the main body 2 of the pultruded product (in particular the so called resin matrix of the pultruded product main body); the polymerized resin forming the projections 5 is joined monolithically directly during the forming process and without the need for any further actions or steps to the polymerized resin forming the main body 2.

Turning now to a more detailed description of the path followed by the web-shaped body, it should be noted, as illustrated in Figures 4 and 5, that at least one upstream section of the web-shaped body 39, extending upstream from the operative tract 40 passing through the pultrusion die, is located at a radially outer zone of the impregnated reinforcement fibers; in the example illustrated, this upstream section is dry and devoid of liquid polymerizable resin with which it comes into contact only inside the pultrusion die 36. The upstream section of web-shaped body 39 contacts the impregnated reinforcement fibers at the inlet of the pultrusion die 36 and then, inside the die 36, receives some of the resin carried by the reinforcement fibers 3' to form the projections 5. Alternatively, an applicator of liquid polymerizable resin 4' may be provided that in the vicinity of the pultrusion die and may be configured to deposit liquid polymerizable resin on one side (lower in Figures 4 and 5) of web-shaped body 39.

In the solutions in Figures 4 and 5, each web-shaped body 39 is moved, concurrently and in synchrony with the impregnated reinforcement fibers 3', to and through the pultrusion die 36, so that the process progress is carried out in a controlled and efficient manner and without risk of transmitting unwanted loads to the fibers.

Alternatively, each web-shaped body can simply be unwound from a respective feed roller and dragged by the pultruded product to which the web-shaped body adheres. Separation of the web-shaped body may be carried out downstream of the pultrusion die or after the completion of the pultrusion process.

As previously mentioned, two or more web-shaped bodies operating in parallel (e.g., from the same feed roller or from separate rollers) and moved simultaneously toward the pultrusion die 36 may be provided to form two or more zones with projections on the outer surface (upper surface intended to form the non-slip treadable surface) of the pultruded profile being formed. Again, note that in the case of using multiple web-shaped bodies 39 crossing the same die 36, said bodies 39 may be all identical or they may have different widths the one from the other. Moreover, different web-shaped bodies may be characterized by cavities of different shapes and/or sizes.

In case two or more web-shaped bodies 39 are fed to a same pultrusion die 36, the process involves arranging such web-shaped bodies 39 across the forming zone 38 of the pultrusion die 36 and handling such bodies 39 simultaneously with the crossing of the impregnated reinforcement fibers 3': in more detail, the process involves arranging the operative tract 40 of each web-shaped body 39 so that two or more operative tracts extend parallel to each other within the forming zone adjacent to the impregnated reinforcement fibers, thus forming simultaneously on the pultruded product treadable surface two or more zones comprising projections 5.

In the case of the use of multiple web-shaped bodies 39 passing through the same pultrusion die 36, the inner surface 37 of the die 36 has one side (in the example in Figure 10, that side is an upper side) intended to form the walkable outer surface of the pultruded product 1 comprising two or more indentations 42. Each of the indentations 42 receives the respective section 40 of a respective web-shaped body 39 and extends along a preponderant part or, according to a currently preferred execution, along the entire longitudinal development of the forming zone 38 and receives the operative tract 40 of a respective web-shaped body, as already described for the case of a pultrusion die 36 with a single indentation 42 (again, see Figure 10).

Each operative tract 40 of each respective web-shaped body, while passing through the pultrusion die, positions in the respective indent and operates as described above.

The pultruded profile obtained, if a plurality of web-shaped bodies 39 passing through the same pultrusion die 36 are used, includes two or more zones with projections, which, for example, may be conformed to parallel strips of projections emerging from a base surface (which is typically flat and smooth9.

As visible from Figures 4 and 5, each web-shaped body 39 may be arranged along a closed-loop operative path with its respective operative tract 40 constantly passing through the pultrusion die (Figure 4). Two or more rollers 44 operate on the closed-loop path and form a feeding and collecting device of the web-shaped body: one of these rollers 44 is motorized. Alternatively, each web-shaped body 39 may originate from a feeding device 45 (e.g., be unwound by a feed roller), pass through the pultrusion die 36 with its respective operative tract 40 and be received by a collecting device 46 (e.g., be rewound by a discharge roller or collected in folds in a suitable accumulator).

In a further alternative not illustrated, the roller or collection device 46 could be absent and the web-shaped body(s) may remain adhered to the surface of the pultruded product downstream of the pultrusion die 36, thereby being entrained by the motion imparted to the product.

According to a further aspect, the/any web-shaped body 39 (particularly when using a web-shaped body made of textile material whose porosity and the size of the openings forming the projection on the profile may be affected by the state of tension) in the section upstream of the pultrusion die 36 i.e., between the feeding device and the pultrusion die 36 is controlled so that it is kept in a slight state of tension, for example, by appropriately braking the feeding of the web coming from the feeding device 45 or by using a tensioning device (such as a dancer roller) acting on a tract of the/each web-shaped body upstream the pultrusion die 36.

It should be noted that the step of separating each web-shaped body 39 from the pultruded profile exiting the pultrusion die 36 may include a sub-step of moving the web-shaped body exiting the pultrusion die according to a trajectory at least angularly distinct from that followed by the pultruded product, so that the projections formed in the pultrusion die 36 disengage from the cavities 41 present in the web-shaped body.

Finally, it should be noted that the profile coming out of the pultrusion die is fully cured and forms a monolithic body integrating, in one piece, the projections 5. Alternatively, the polymerization of the polymerizable resin coming out of the pultrusion die may be partial (for example sufficiently advanced but not 100% complete), so that the pultruded profile is already solid at the exit of the pultrusion die and no projections 5 detach from the rest of the pultruded product while removing the web-shaped body from the pultruded product itself.

In structural terms, the web-shaped body can be a fabric (Figure 6), for example, of a weight greater than 100 g/m2. More specifically, the weight of the web-shaped body when in fabric form can be between 100 and 500 g/m2.

The warp and weft filaments are arranged transversely to each other and intersect each other to form numerous cavities 41 spaced similar in size to those in projection 5 described above.

Alternatively, each web-shaped body is made of a continuous plastic or metal material that includes:
- a base layer 47 (which, for example, may be continuous and free of through openings), and
- a plurality of cavities 41 formed in the base layer to define the projection 5; the cavities can be rectilinear grooves alternating with purely rectilinear ridges, as shown in figure 7, or discrete cavities spaced both longitudinally and transversely (similarly to the solution in figure 6), but of absolutely controlled shape such as prisms, cylinders, cones, truncated cones, pyramids or truncated pyramids, or more as required.

It should be pointed out that the web-shaped body, whether of the textile type in Figure 6 or of the type made of m plastic or metal material, can be suitably surface-treated. For example, the web-shaped body 39 may have an outer surface coated with a layer of nonstick material; the nonstick layer may, for example, be a continuous layer comprising at least one of:
- A silicone-based material,
- polytetrafluoroethylene (PTFE),
- polyvinyl alcohol (PVA).

Treatment with non-stick material can facilitate the separation step of the web-shaped body from the pultruded product exiting die 36.

Once the web-shaped body has been separated from the pultruded profile it proceeds downstream of the die 36 to a pulling station 48 that actually has in charge of pulling the pultruded product from downstream from the pultrusion die itself. In other words, the step of moving the reinforcement fibers 3, 3' to the pultrusion die is achieved by pulling a portion of the pultruded product from downstream of the pultrusion die itself thanks precisely to the pulling station 48, which, for example, may include two or more motorized rollers active on the surface of the pultruded profile. A cutting station 49 is then provided downstream of the pulling station, where the step of cross-cutting the pultruded product to obtain pultruded products of predetermined length is performed.

Finally, as mentioned above, the process requires that the polymerizable resin that is in a liquid state during impregnation of the reinforcement fibers and possibly (if provided) during application to the web-shaped body is then solidified so that the product exiting the die is a solid composite body. The resin solidification phase occurs progressively during the process and particularly within the pultrusion die 36. In order to control the solidification time, the process may comprise one or more emission stations of an actinic radiation 50 (e.g. UV rays) operating, for example, at the die 36 (which will have to be suitably designed so as to allow the actinic radiation to reach the resin) and/or downstream of the die to finalize the solidification. Of course, it is not ruled out that solidification can occur completely by natural light.

Where present each radiation emission station is configured to:
- Emitting actinic radiation, optionally by ultraviolet lamps, in the direction of the pultruded product, and/or
- Expose the product to natural light.

As mentioned above, at least part of the solidification step is optionally subsequent to the exit of the continuous product from the pultrusion die 36 (and is, for example, carried out by station 50 shown in Figures 4 and 5): thus, the step of separating each web-shaped body 39 from the pultruded product is prior to exposure to actinic radiation or complete solidification of the polymerizable resin.

Equipment 30 may also include a control unit or controller 100, for example a programmable controller 100 of the digital type, configured or programmed to control the equipment active components, namely:
- the feeding and collecting device 44 (or the feeding device 45 and collecting device 46 in the example of fig. 5),
- the pulling station 48,
- the feeding station 31 (optionally),
- the station 50 emitting actinic radiations (if present),
- the sprayers of resin 34 (if present),
- the cutting station 49 (if present),

in a way to execute the process of making a pultruded product described above or claimed in the appended claims.

## Claims

1. Process of making a pultruded product (1) having a non-slip walkable surface, said process comprising:
- impregnating reinforcement fibers (3) with polymerizable resin (4') forming impregnated reinforcement fibers (3'),
- moving the impregnated reinforcement fibers (3') to and through a pultrusion die (36), wherein said pultrusion die (36) has an inner surface (37) delimiting at least one forming zone (38) extending through the pultrusion die itself and intended to receive the impregnated reinforcement fibers (3'),
- simultaneously with said impregnated reinforcement fibers (3') crossing the forming zone (38), arranging an operative tract (40) of at least one web-shaped body (39) across the forming zone (38) of the pultrusion die (36), the operative tract (40) of each web-shaped body (39) being positioned within the forming zone (38) adjacent to the impregnated reinforcement fibers (3'), said operative tract (40) comprising a plurality of cavities (41), spaced apart from each other, facing toward said impregnated reinforcement fibers (3') and suitable for receiving part of the polymerizable resin (4') present in the pultrusion die (36),
- solidifying at least partially said polymerizable resin (4') and forming, at the exit or downstream of the pultrusion die, a pultruded product (1) in the solid state, wherein said pultruded product has at least one exterior walkable surface (2a) provided with a plurality of projections (5) formed in one piece with the rest of the pultruded product by the solidification of the polymerizable resin that has occupied said cavities,
**characterized in that** the operative tract (40) of the at least one web-shaped body (39) is arranged peripherally to the reinforcement fibers and in contact with the inner surface (37) at the forming zone (38), so that the exterior walkable surface (2a) formed on the pultruded product (1) comprises:
- zones without projections (6), each defining a flat and smooth base surface,
- zones comprising projections (7), each comprising a plurality of spaced apart projections (5) whose ridges (8) project from said base surface.

2. A process according to claim 1, comprising separating, downstream of the pultrusion die (36), the operative tract (40) of the web-shaped body from the pultruded product (1) wherein, as a result of separating the operative tract (40) from the pultruded product (1), said pultruded product has at least one exterior walkable surface (2a) free from the web-shaped body and provided with said plurality of projections (5).

3. Process according to claim 1 or 2, wherein the distance between the top of the ridges (8) of said projections (5) and the base surface is between 0.05 mm and 5 mm, more optionally between 0.1 mm and 2.5 mm.

4. Process according to claim 3, wherein each of the zones comprising projections (7) has a plurality of spaced apart projections (5), wherein each projection in each of said zones has a base (5a) coplanar with the base surface and completely emerges relative to said base surface.

5. Process according to any one of the preceding claims, wherein the operative tract (40) of the web-shaped body (39) has the plurality of cavities (41), longitudinally and transversely spaced from each other, e.g., of cylindrical, prismatic, conical, truncated cone, pyramidal conformation, or truncated-pyramidal, so as to form on the external walkable surface (2a) of the pultruded product one or more zones comprising projections (7), each zone having a plurality of projections which are spaced longitudinally and transversely with each other and which are of conformation counter-shaped to that of the cavities (41).

6. A process according to any one of the preceding claims, wherein the inner surface (37) of the pultrusion die (36) has a side, optionally an upper side, intended to form said exterior walkable surface (2a) of the pultruded product, wherein said side of the inner surface includes one or more indentations (42) each of which extends along a preponderant portion of, optionally the entire, longitudinal development of the forming zone (38) and receives the operative tract (40) of a respective web-shaped body (39); and
wherein a flank of the operative tract (40) of each web-shaped body contacts or hovers over a back wall (43) of a respective one of said one or more indentations (42), while an opposing flank of the operative tract (40) of each web-shaped body faces the inside of the pultrusion die (36) and optionally is arranged flush with a portion of the inner surface (37) of the pultrusion die adjacent to the indentation.

7. Process according to any one of the preceding claims, wherein said projections (5) are formed exclusively of polymerizable resin resulting from polymerization of said polymerizable resin portion (4') present in the pultrusion die, wherein an additional polymerizable resin portion present in the pultrusion die (36) forms, following polymerization, a polymer matrix (4) reinforced with reinforcement fibers (3) defining a main body (2) of the pultruded product; and wherein the polymerized resin forming the projections (5) is joined monolithically to the polymer matrix (4) of the main body (2); optionally wherein said projections (5) do not include reinforcement fibers.

8. Process according to any one of the preceding claims, wherein at least one upstream section of said web-shaped body (39), extending upstream from the operative tract (40) passing through the pultrusion die, is positioned at a radially outer zone relative to said impregnated reinforcement fibers (3'),
wherein said upstream section is dry and free of polymerizable resin (4'),
optionally wherein said upstream section of the web-shaped body (39) contacts the impregnated reinforcement fibers at the inlet of the pultrusion die and wherein each web-shaped body (39) is moved, concurrently and in synchrony with the impregnated reinforcement fibers (3'), toward and across the pultrusion die (36).

9. Process according to any one of the preceding claims, wherein two or more of said web-shaped bodies (39) are provided; and
wherein the process provides, simultaneously with said impregnated reinforcement fibers (3') crossing the forming zone (38), for arranging the operative tract (40) of each web-shaped body (39) across the forming zone (38) of the pultrusion die (36), so as to arrange two or more operative tracts (40) parallel to each other within the forming zone (38) adjacent to the impregnated reinforcement fibers (3'), and thus simultaneously form on the exterior walkable surface (2a) of the pultruded product two or more zones comprising projections (7);
optionally wherein said two or more zones comprising projections (7) are shaped as parallel strips of protrusions emerging from said/from a base surface, which is flat and smooth.

10. Process according to any one of the preceding claims 2 to 9, wherein each web-shaped body (39) is arranged along a closed-loop operative path with its respective operative tract (40) constantly passing through the pultrusion die (36),
or wherein each web-shaped body (39) comes from a feeding device, passes through the pultrusion die (36) with its respective operative tract (40) and is optionally received by an unloading device;
and wherein the step of separating each web-shaped body (39) comprises a sub-step of moving the web-shaped body (39) out of the pultrusion die (36) according to a trajectory at least angularly distinct from that followed by the pultruded product (1).

11. Process according to any one of the preceding claims, wherein the web-shaped body (39) is a fabric comprising warp and weft filaments and wherein such fabric has weight between 100 and 500 g/m2, wherein the warp and weft filaments arranged transversely to each other form said cavities (41); or wherein each web-shaped body is made of a continuous plastic or metal material that includes:
- a base layer (47),
- a plurality of said cavities (41) in said base layer (20) to define said projections,
optionally wherein each web-shaped body has an outer surface coated with nonstick material,
even more optionally wherein the nonstick layer is a continuous layer comprising at least one among:
- a silicone-based material,
- polytetrafluoroethylene (PTFE),
- polyvinyl alcohol (PVA).

12. Process according to any one of the preceding claims, wherein the step of moving the impregnated reinforcement fibers (3') to the pultrusion die (36), and optionally the step of pulling the web-shaped body from the pultrusion die, is achieved by pulling a portion of the pultruded product from downstream of the pultrusion die, even more optionally wherein there is a step of cross-cutting the pultruded product to obtain pultruded products of predetermined length.

13. Pultruded product (1) having a walkable surface (2a) obtained by the process according to any one of the preceding claims 1 to 12, wherein the pultruded product includes:
- a main body (2) in which reinforcement fibers (3) are embedded in a polymer matrix (4) obtained by solidification of said polymerizable resin (4'), and
- a plurality of projections (5) formed by the solidification of polymerizable resin that occupied said spaced cavities (41), said projections (5) being joined in one piece with the polymer matrix (4) of the main body (2),
wherein the pultruded product (1) has the exterior walkable surface (2a) defined at least in part by said plurality of projections (5);
wherein the exterior walkable surface (2a) includes:
- zones without projections (6), the outer surface of which is formed by respective sections of the outer surface of the main body,
- zones comprising projections (7), each of the zones comprising projections presenting a plurality of spaced apart projections whose ridges (8) project with respect to the outer surface of the zones without projections (6).

14. Pultruded product according to claim 13, wherein the outer surface of the zones without projections (6) is flat, and wherein the distance between the ridges (8) of said projections (5) and an ideal plane (P) tangent to the outer surface of the zones without projections (6) is between 0.05 mm and 5 mm, more optionally between 0.1 mm and 2.5 mm;
wherein each of the zones comprising projections (7) has a plurality of spaced apart projections, and
wherein each of the projections (5):
- emerges from a respective base (5a) lying on said ideal plane (P), and
- extends away from said base (5a),
so that, with reference to a pultruded product use configuration (1) in which the exterior walkable surface (2a) is arranged superiorly, each projection develops more than 70 percent in height, or completely, above the ideal plane (P);
wherein said projections (5) are formed exclusively by said solidified polymerizable resin and do not include reinforcement fibers;
and optionally wherein the walkable surface (2a) of the pultruded product (1) has two or more zones comprising projections (7) and said two or more zones comprising projections are shaped as parallel strips of projections emerging from said/a flat base surface.

15. Pavement (20) comprising a plurality of pultruded products (1) arranged side by side, wherein each of the pultruded products is of the type according to any one of claims 13 to 14 or is made using the process of any one of claims 1 to 12.

## Patentansprüche

1. Verfahren zur Herstellung eines pultrudierten Erzeugnisses (1), welches eine rutschfeste begehbare Oberfläche aufweist, wobei das Verfahren umfasst:
- Imprägnieren von Verstärkungsfasern (3) mit polymerisierbarem Harz (4'), wobei imprägnierte Verstärkungsfasern (3') gebildet werden,
- Bewegen der imprägnierten Verstärkungsfasern (3') zu und durch eine Pultrusionsdüse (36), wobei die Pultrusionsdüse (36) eine Innenfläche (37) aufweist, welche wenigstens eine Formgebungszone (38) begrenzt, welche sich durch die Pultrusionsdüse selbst erstreckt und dazu bestimmt ist, die imprägnierten Verstärkungsfasern (3') aufzunehmen,
- gleichzeitig mit dem Durchqueren der Formgebungszone (38) durch die imprägnierten Verstärkungsfasern (3'), Anordnen eines Wirkabschnitts (40) wenigstens eines bahnförmigen Körpers (39) quer durch die Formgebungszone (38) der Pultrusionsdüse (36), wobei der Wirkabschnitt (40) jedes bahnförmigen Körpers (39) innerhalb der Formgebungszone (38) angrenzend an die imprägnierten Verstärkungsfasern (3') positioniert wird, wobei der Wirkabschnitt (40) eine Mehrzahl von Hohlräumen (41) umfasst, welche voneinander beabstandet sind, den imprägnierten Verstärkungsfasern (3') zugewandt sind und geeignet sind, einen Teil des in der Pultrusionsdüse (36) vorhandenen polymerisierbaren Harzes (4') aufzunehmen,
- wenigstens teilweises Verfestigen des polymerisierbaren Harzes (4') und Bilden, am Ausgang oder stromabwärts der Pultrusionsdüse, eines pultrudierten Erzeugnisses (1) im festen Zustand, wobei das pultrudierte Erzeugnis wenigstens eine äußere begehbare Oberfläche (2a) aufweist, welche mit einer Mehrzahl von Vorsprüngen (5) versehen ist, welche einstückig mit dem Rest des pultrudierten Erzeugnisses durch die Verfestigung des polymerisierbaren Harzes gebildet werden, welches die Hohlräume ausgefüllt hat,
**dadurch gekennzeichnet, dass** der Wirkabschnitt (40) des wenigstens einen bahnförmigen Körpers (39) peripher zu den Verstärkungsfasern und in Kontakt mit der Innenfläche (37) an der Formgebungszone (38) angeordnet wird, so dass die auf dem pultrudierten Erzeugnis (1) gebildete äußere begehbare Oberfläche (2a) umfasst:
- Zonen ohne Vorsprünge (6), welche jeweils eine flache und glatte Basisfläche definieren,
- Vorsprünge umfassende Zonen (7), welche jeweils eine Mehrzahl von voneinander beabstandeten Vorsprüngen (5) umfassen, deren Grate (8) von der Basisfläche vorstehen.

2. Verfahren nach Anspruch 1, umfassend ein Trennen, stromabwärts der Pultrusionsdüse (36), des Wirkabschnitts (40) des bahnförmigen Körpers von dem pultrudierten Erzeugnis (1), wobei als ein Ergebnis des Trennens des Wirkabschnitts (40) von dem pultrudierten Erzeugnis (1) das pultrudierte Erzeugnis wenigstens eine äußere begehbare Oberfläche (2a) aufweist, welche frei von dem bahnförmigen Körper und mit der Mehrzahl von Vorsprüngen (5) versehen ist.

3. Verfahren nach Anspruch 1 oder 2, wobei der Abstand zwischen der Oberseite der Grate (8) der Vorsprünge (5) und der Basisfläche zwischen 0,05 mm und 5 mm beträgt, weiter optional zwischen 0,1 mm und 2,5 mm.

4. Verfahren nach Anspruch 3, wobei jede der Vorsprünge umfassenden Zonen (7) eine Mehrzahl von voneinander beabstandeten Vorsprüngen (5) aufweist, wobei jeder Vorsprung in jeder der Zonen eine Basis (5a) aufweist, welche koplanar mit der Basisfläche ist und vollständig gegenüber der Basisfläche hervortritt.

5. Verfahren nach einem der vorhergehenden Ansprüche, wobei der Wirkabschnitt (40) des bahnförmigen Körpers (39) die Mehrzahl von Hohlräumen (41) aufweist, welche in Längs-und Querrichtung voneinander beabstandet sind, z. B. von zylindrischer, prismatischer, konischer, kegelstumpfförmiger, pyramidaler oder pyramidenstumpfförmiger Gestalt, um auf der äußeren begehbaren Oberfläche (2a) des pultrudierten Erzeugnisses eine oder mehrere Vorsprünge umfassende Zonen (7) zu bilden, wobei jede Zone eine Mehrzahl von Vorsprüngen aufweist, welche in Längs- und Querrichtung voneinander beabstandet sind und eine zu derjenigen der Hohlräume (41) gegenförmige Gestalt aufweisen.

6. Verfahren nach einem der vorhergehenden Ansprüche, wobei die Innenfläche (37) der Pultrusionsdüse (36) eine Seite, optional eine obere Seite, aufweist, welche dazu bestimmt ist, die äußere begehbare Oberfläche (2a) des pultrudierten Erzeugnisses zu bilden, wobei diese Seite der Innenfläche eine oder mehrere Einbuchtungen (42) umfasst, von welchen sich jede entlang eines überwiegenden Teils oder optional der gesamten Längserstreckung der Formgebungszone (38) erstreckt und den Wirkabschnitt (40) eines jeweiligen bahnförmigen Körpers (39) aufnimmt;
und
wobei eine Flanke des Wirkabschnitts (40) jedes bahnförmigen Körpers eine Rückwand (43) einer jeweiligen der einen oder mehreren Einbuchtungen (42) berührt oder über dieser schwebt, während eine gegenüberliegende Flanke des Wirkabschnitts (40) jedes bahnförmigen Körpers dem Inneren der Pultrusionsdüse (36) zugewandt ist und optional bündig mit einem Abschnitt der Innenfläche (37) der Pultrusionsdüse angrenzend an die Einbuchtung angeordnet ist.

7. Verfahren nach einem der vorhergehenden Ansprüche, wobei die Vorsprünge (5) ausschließlich aus polymerisierbarem Harz gebildet sind, welches aus einer Polymerisation des in der Pultrusionsdüse vorhandenen Anteils an polymerisierbarem Harz (4') resultiert, wobei ein zusätzlicher Anteil an polymerisierbarem Harz, welcher in der Pultrusionsdüse (36) vorhanden ist, nach der Polymerisation eine mit Verstärkungsfasern (3) verstärkte Polymermatrix (4) bildet, welche einen Hauptkörper (2) des pultrudierten Erzeugnisses definiert; und wobei das die Vorsprünge (5) bildende polymerisierte Harz monolithisch mit der Polymermatrix (4) des Hauptkörpers (2) verbunden ist; optional wobei die Vorsprünge (5) keine Verstärkungsfasern enthalten.

8. Verfahren nach einem der vorhergehenden Ansprüche, wobei wenigstens ein stromaufwärtiger Abschnitt des bahnförmigen Körpers (39), welcher sich stromaufwärts von dem durch die Pultrusionsdüse hindurchgehenden Wirkabschnitt (40) erstreckt, in einer radial äußeren Zone bezüglich der imprägnierten Verstärkungsfasern (3') positioniert ist, wobei der stromaufwärtige Abschnitt trocken und frei von polymerisierbarem Harz (4') ist, optional wobei der stromaufwärtige Abschnitt des bahnförmigen Körpers (39) die imprägnierten Verstärkungsfasern an dem Einlass der Pultrusionsdüse berührt und wobei jeder bahnförmige Körper (39) gleichzeitig und synchron mit den imprägnierten Verstärkungsfasern (3') zu und durch die Pultrusionsdüse (36) bewegt wird.

9. Verfahren nach einem der vorhergehenden Ansprüche, wobei zwei oder mehr der bahnförmigen Körper (39) vorgesehen sind; und
wobei das Verfahren gleichzeitig mit dem Durchqueren der Formgebungszone (38) durch die imprägnierten Verstärkungsfasern (3') vorsieht, den Wirkabschnitt (40) jedes bahnförmigen Körpers (39) quer durch die Formgebungszone (38) der Pultrusionsdüse (36) anzuordnen, um zwei oder mehr Wirkabschnitte (40) parallel zueinander innerhalb der Formgebungszone (38) angrenzend an die imprägnierten Verstärkungsfasern (3') anzuordnen und somit gleichzeitig auf der äußeren begehbaren Oberfläche (2a) des pultrudierten Erzeugnisses zwei oder mehr Vorsprünge umfassende Zonen (7) zu bilden;
optional wobei die zwei oder mehr Vorsprünge umfassenden Zonen (7) als parallele Streifen von Vorsprüngen geformt sind, welche von der/einer Basisfläche hervorstehen, welche flach und glatt ist.

10. Verfahren nach einem der vorhergehenden Ansprüche 2 bis 9, wobei jeder bahnförmige Körper (39) entlang eines geschlossenen Betrieb-Schleifenpfads angeordnet ist, wobei sein jeweiliger Wirkabschnitt (40) ständig durch die Pultrusionsdüse (36) hindurchgeht,
oder wobei jeder bahnförmige Körper (39) von einer Zuführvorrichtung kommt, mit seinem jeweiligen Wirkabschnitt (40) durch die Pultrusionsdüse (36) hindurchgeht und optional von einer Entladevorrichtung aufgenommen wird;
und wobei der Schritt des Trennens jedes bahnförmigen Körpers (39) einen Unterschritt des Bewegens des bahnförmigen Körpers (39) aus der Pultrusionsdüse (36) gemäß einer Trajektorie umfasst, welche wenigstens winkelmäßig von derjenigen verschieden ist, welcher das pultrudierte Erzeugnis (1) folgt.

11. Verfahren nach einem der vorhergehenden Ansprüche, wobei der bahnförmige Körper (39) ein Gewebe ist, welches Kett- und Schussfäden umfasst, und wobei ein solches Gewebe ein Gewicht zwischen 100 und 500 g/m² aufweist, wobei die quer zueinander angeordneten Kett- und Schussfäden die Hohlräume (41) bilden; oder wobei jeder bahnförmige Körper aus einem durchgehenden Kunststoff- oder Metallmaterial hergestellt ist, welches umfasst:
- eine Basisschicht (47),
- eine Mehrzahl der Hohlräume (41) in der Basisschicht (20), um die Vorsprünge zu definieren,
optional wobei jeder bahnförmige Körper eine mit Antihaftmaterial beschichtete Außenfläche aufweist, noch weiter optional wobei die Antihaftschicht eine durchgehende Schicht ist, welche wenigstens eines umfasst aus:
- ein Material auf Silikonbasis,
- Polytetrafluorethylen (PTFE),
- Polyvinylalkohol (PVA).

12. Verfahren nach einem der vorhergehenden Ansprüche, wobei der Schritt des Bewegens der imprägnierten Verstärkungsfasern (3') zu der Pultrusionsdüse (36), und optional der Schritt des Ziehens des bahnförmigen Körpers aus der Pultrusionsdüse, durch Ziehen eines Abschnitts des pultrudierten Erzeugnisses von stromabwärts der Pultrusionsdüse erreicht wird, noch weiter optional wobei ein Schritt des Querschneidens des pultrudierten Erzeugnisses vorgesehen ist, um pultrudierte Erzeugnisse vorbestimmter Länge zu erhalten.

13. Pultrudiertes Erzeugnis (1), welches eine begehbare Oberfläche (2a) aufweist, erhalten durch das Verfahren nach einem der vorhergehenden Ansprüche 1 bis 12, wobei das pultrudierte Erzeugnis umfasst:
- einen Hauptkörper (2), in welchem Verstärkungsfasern (3) in eine Polymermatrix (4) eingebettet sind, welche durch Verfestigung des polymerisierbaren Harzes (4') erhalten wurde, und
- eine Mehrzahl von Vorsprüngen (5), welche durch die Verfestigung von polymerisierbarem Harz gebildet sind, welches die beabstandeten Hohlräume (41) ausgefüllt hat, wobei die Vorsprünge (5) einstückig mit der Polymermatrix (4) des Hauptkörpers (2) verbunden sind,
wobei das pultrudierte Erzeugnis (1) die äußere begehbare Oberfläche (2a) aufweist, welche wenigstens teilweise durch die Mehrzahl von Vorsprüngen (5) definiert ist;
wobei die äußere begehbare Oberfläche (2a) umfasst:
- Zonen ohne Vorsprünge (6), deren Außenfläche durch jeweilige Abschnitte der Außenfläche des Hauptkörpers gebildet ist,
- Vorsprünge umfassende Zonen (7), wobei jede der Vorsprünge umfassenden Zonen eine Mehrzahl von voneinander beabstandeten Vorsprüngen aufweist, deren Grate (8) gegenüber der Außenfläche der Zonen ohne Vorsprünge (6) vorstehen.

14. Pultrudiertes Erzeugnis nach Anspruch 13, wobei die Außenfläche der Zonen ohne Vorsprünge (6) flach ist, und wobei der Abstand zwischen den Graten (8) der Vorsprünge (5) und einer idealen Ebene (P), welche tangential zu der Außenfläche der Zonen ohne Vorsprünge (6) verläuft, zwischen 0,05 mm und 5 mm beträgt, weiter optional zwischen 0,1 mm und 2,5 mm;
wobei jede der Vorsprünge umfassenden Zonen (7) eine Mehrzahl von voneinander beabstandeten Vorsprüngen aufweist, und wobei jeder der Vorsprünge (5):
- von einer jeweiligen Basis (5a) hervortritt, welche auf der idealen Ebene (P) liegt, und
- sich von der Basis (5a) weg erstreckt,
so dass, bezogen auf eine Verwendungskonfiguration des pultrudierten Erzeugnisses (1), in welcher die äußere begehbare Oberfläche (2a) oben angeordnet ist, jeder Vorsprung sich zu mehr als 70 Prozent seiner Höhe oder vollständig oberhalb der idealen Ebene (P) entwickelt;
wobei die Vorsprünge (5) ausschließlich aus dem verfestigten polymerisierbaren Harz gebildet sind und keine Verstärkungsfasern enthalten;
und optional wobei die begehbare Oberfläche (2a) des pultrudierten Erzeugnisses (1) zwei oder mehr Vorsprünge umfassende Zonen (7) aufweist und die zwei oder mehr Vorsprünge umfassenden Zonen als parallele Streifen von Vorsprüngen geformt sind, welche von der/einer flachen Basisfläche hervorstehen.

15. Belag (20), umfassend eine Mehrzahl von nebeneinander angeordneten pultrudierten Erzeugnissen (1), wobei jedes der pultrudierten Erzeugnisse von dem Typ gemäß einem der Ansprüche 13 bis 14 ist oder unter Verwendung des Verfahrens nach einem der Ansprüche 1 bis 12 hergestellt ist.

## Revendications

1. Procédé de fabrication d'un produit pultrudé (1) ayant une surface non glissante propice à la marche, ledit procédé comprenant les étapes consistant à :
- imprégner des fibres de renfort (3) avec une résine polymérisable (4') formant des fibres de renfort imprégnées (3'),
- déplacer les fibres de renfort imprégnées (3') vers et à travers une filière de pultrusion (36), dans lequel ladite filière de pultrusion (36) présente une surface interne (37) délimitant au moins une zone de mise en forme (38) s'étendant à travers la filière de pultrusion elle-même et prévue pour recevoir les fibres de renfort imprégnées (3'),
- simultanément auxdites fibres de renfort imprégnées (3') traversant la zone de mise en forme (38), agencer un tronçon opératif (40) d'au moins un corps en forme de bande (39) à travers la zone de mise en forme (38) de la filière de pultrusion (36), le tronçon opératif (40) de chaque corps en forme de bande (39) étant positionné à l'intérieur de la zone de mise en forme (38) adjacent aux fibres de renfort imprégnées (3'), ledit tronçon opératif (40) comprenant une pluralité de cavités (41), espacées à l'écart l'une de l'autre, faisant face vers lesdites fibres de renfort imprégnées (3') et convenant pour recevoir une partie de la résine polymérisable (4') présente dans la filière de pultrusion (36),
- solidifier au moins partiellement ladite résine polymérisable (4') et former, à la sortie ou en aval de la filière de pultrusion, un produit pultrudé (1) à l'état solide, dans lequel ledit produit pultrudé présente au moins une surface extérieure propice à la marche (2a) pourvue d'une pluralité de projections (5) formées en une pièce avec le reste du produit pultrudé par la solidification de la résine polymérisable qui a occupé lesdites cavités,
**caractérisé en ce que** le tronçon opératif (40) d'au moins un corps en forme de bande (39) est agencé périphériquement par rapport aux fibres de renfort et en contact avec la surface interne (37) au niveau de la zone de mise en forme (38), de sorte que la surface extérieure propice à la marche (2a) formée sur le produit pultrudé (1) comprend :
- des zones sans projections (6), définissant chacune une surface de base plate et lisse,
- des zones comprenant des projections (7), comprenant chacune une pluralité de projections (5) espacées à l'écart dont les arêtes (8) se projettent depuis ladite surface de base.

2. Procédé selon la revendication 1, comprenant une séparation, en aval de la filière de pultrusion (36), du tronçon opératif (40) du corps en forme de bande du produit pultrudé (1) dans lequel, en résultat de la séparation du tronçon opératif (40) du produit pultrudé (1), ledit produit pultrudé présente au moins une surface extérieure propice à la marche (2a) libre du corps en forme de bande et pourvue de ladite pluralité de projections (5).

3. Procédé selon la revendication 1 ou 2, dans lequel la distance entre le sommet des arêtes (8) desdites projections (5) et la surface de base est comprise entre 0,05 mm et 5 mm, plus facultativement entre 0,1 mm et 2,5 mm.

4. Procédé selon la revendication 3, dans lequel chacune des zones comprenant des projections (7) présente une pluralité de projections (5) espacées à l'écart, dans lequel chaque projection dans chacune desdites zones présente une base (5a) coplanaire avec la surface de base et émerge entièrement par rapport à ladite surface de base.

5. Procédé selon l'une quelconque des revendications précédentes, dans lequel le tronçon opératif (40) du corps en forme de bande (39) présente la pluralité de cavités (41), espacées longitudinalement et transversalement les unes des autres, par exemple, de conformation cylindrique, prismatique, conique, tronconique, pyramidale, ou pyramidale tronquée, afin de former sur la surface externe propice à la marche (2a) du produit pultrudé une ou plusieurs zones comprenant des projections (7), chaque zone ayant une pluralité de projections qui sont espacées longitudinalement et transversalement l'une par rapport à l'autre et qui sont d'une conformation en contreforme de celle des cavités (41).

6. Procédé selon l'une quelconque des revendications précédentes, dans lequel la surface interne (37) de la filière de pultrusion (36) présente un côté, éventuellement un côté supérieur, prévu pour former ladite surface extérieure propice à la marche (2a) du produit pultrudé, dans lequel ledit côté de la surface interne inclut une ou plusieurs indentations (42) dont chacune s'étend le long d'une portion prépondérante de, éventuellement l'entièreté, du développement longitudinal de la zone de mise en forme (38) et reçoit le tronçon opératif (40) d'un corps respectif en forme de bande (39) ; et
dans lequel un flanc du tronçon opératif (40) de chaque corps en forme de bande est en contact avec ou surplombe une paroi arrière (43) de l'une respective desdites une ou plusieurs indentations (42), tandis qu'un flanc opposé du tronçon opératif (40) de chaque corps en forme de bande fait face vers l'intérieur de la filière de pultrusion (36) et éventuellement est agencé affleurant avec une portion de la surface interne (37) de la filière de pultrusion adjacente à l'indentation.

7. Procédé selon l'une quelconque des revendications précédentes, dans lequel lesdites projections (5) sont formées exclusivement de résine polymérisable résultant de la polymérisation de ladite portion de résine polymérisable (4') présente dans la filière de pultrusion, dans lequel une portion de résine polymérisable additionnelle présente dans la filière de pultrusion (36) forme, suite à la polymérisation, une matrice polymère (4) renforcée avec des fibres de renfort (3) définissant un corps principal (2) du produit pultrudé ; et dans lequel la résine polymérisée formant les projections (5) est jointe de manière monolithique à la matrice polymère (4) du corps principal (2) ; éventuellement dans lequel lesdites projections (5) n'incluent pas de fibres de renfort.

8. Procédé selon l'une quelconque des revendications précédentes, dans lequel au moins une section en amont dudit corps en forme de bande (39), s'étendant en amont du tronçon opératif (40) passant à travers la filière de pultrusion, est positionnée au niveau d'une zone radialement externe par rapport auxdites fibres de renfort imprégnées (3'),
dans lequel ladite section en amont est sèche et exempte de résine polymérisable (4'), éventuellement dans lequel ladite section en amont du corps en forme de bande (39) entre en contact avec les fibres de renfort imprégnées au niveau de l'orifice d'entrée de la filière de pultrusion et dans lequel chaque corps en forme de bande (39) est déplacé, concurremment et en synchronicité avec les fibres de renfort imprégnées (3'), vers et à travers la filière de pultrusion (36).

9. Procédé selon l'une quelconque des revendications précédentes, dans lequel deux ou plusieurs desdits corps en forme de bande (39) sont prévus ; et
dans lequel le procédé prévoit, simultanément auxdites fibres de renfort imprégnées (3') traversant la zone de mise en forme (38), d'agencer le tronçon opératif (40) de chaque corps en forme de bande (39) à travers la zone de mise en forme (38) de la filière de pultrusion (36), afin d'agencer deux ou plusieurs tronçons opératifs (40) parallèles l'un par rapport à l'autre à l'intérieur de la zone de mise en forme (38) adjacents aux fibres de renfort imprégnées (3'), et ainsi former simultanément sur la surface extérieure propice à la marche (2a) du produit pultrudé deux ou plusieurs zones comprenant des projections (7) ;
éventuellement dans lequel lesdites deux ou plusieurs zones comprenant des projections (7) sont mises en forme en bandes parallèles de protubérances émergeant de ladite/d'une surface de base, qui est plate et lisse.

10. Procédé selon l'une quelconque des revendications précédentes 2 à 9, dans lequel chaque corps en forme de bande (39) est agencé le long d'un trajet fonctionnel en boucle fermée avec son tronçon opératif (40) respectif passant constamment à travers la filière de pultrusion (36),
ou dans lequel chaque corps en forme de bande (39) provient d'un dispositif d'alimentation, passe à travers la filière de pultrusion (36) avec son tronçon opératif (40) respectif et est éventuellement reçu par un dispositif de déchargement ;
et dans lequel l'étape de séparation de chaque corps en forme de bande (39) comprend une sous-étape de déplacement du corps en forme de bande (39) hors de la filière de pultrusion (36) selon une trajectoire au moins angulairement distincte de celle suivie par le produit pultrudé (1).

11. Procédé selon l'une quelconque des revendications précédentes, dans lequel le corps en forme de bande (39) est un textile comprenant des filaments de chaîne et de trame et dans lequel un tel textile présente un poids compris entre 100 et 500 g/m2, dans lequel les filaments de chaîne et de trame agencés transversalement les uns par rapport aux autres forment lesdites cavités (41) ;
ou dans lequel chaque corps en forme de bande est constitué d'un matériau continu en matière plastique ou en métal qui inclut :
- une couche de base (47),
- une pluralité desdites cavités (41) dans ladite couche de base (20) pour définir lesdites projections,
éventuellement dans lequel chaque corps en forme de bande présente une surface externe revêtue de matériau non adhésif,
même plus facultativement dans lequel la couche non adhésive est une couche continue comprenant au moins l'un parmi :
- un matériau à base de silicone,
- du polytétrafluoroéthylène (PTFE),
- du poly(alcool de vinyle) (PVA).

12. Procédé selon l'une quelconque des revendications précédentes, dans lequel l'étape de déplacement des fibres de renfort imprégnées (3') vers la filière de pultrusion (36), et éventuellement l'étape de traction du corps en forme de bande de la filière de pultrusion, est atteinte en tirant une portion du produit pultrudé depuis l'aval de la filière de pultrusion, même plus facultativement dans lequel il existe une étape de découpe transversale du produit pultrudé pour obtenir des produits pultrudés de longueur prédéterminée.

13. Produit pultrudé (1) ayant une surface propice à la marche (2a) obtenue par le procédé selon l'une quelconque des revendications précédentes 1 à 12, dans lequel le produit pultrudé inclut :
- un corps principal (2) dans lequel des fibres de renfort (3) sont enchâssées dans une matrice polymère (4) obtenue par solidification de ladite résine polymérisable (4'), et
- une pluralité de projections (5) formées par la solidification de résine polymérisable qui occupait lesdites cavités (41) espacées, lesdites projections (5) étant jointes en une pièce à la matrice polymère (4) du corps principal (2),
dans lequel le produit pultrudé (1) présente la surface extérieure propice à la marche (2a) définie au moins en partie par ladite pluralité de projections (5) ;
dans lequel la surface extérieure propice à la marche (2a) inclut :
- des zones sans projections (6), dont la surface externe est formée par des sections respectives de la surface externe du corps principal,
- des zones comprenant des projections (7), chacune des zones comprenant des projections présentant une pluralité de projections espacées à l'écart dont les arêtes (8) se projettent par rapport à la surface externe des zones sans projections (6).

14. Produit pultrudé selon la revendication 13, dans lequel la surface externe des zones sans projections (6) est plate, et dans lequel la distance entre les arêtes (8) desdites projections (5) et un plan idéal (P) tangent à la surface externe des zones sans projections (6) est comprise entre 0,05 mm et 5 mm, plus facultativement entre 0,1 mm et 2,5 mm ;
dans lequel chacune des zones comprenant des projections (7) présente une pluralité de projections espacées à l'écart, et dans lequel chacune des projections (5) :
- émerge d'une base (5a) respective reposant sur ledit plan idéal (P), et
- s'étend à l'opposé de ladite base (5a),
de sorte que, en référence à une configuration d'utilisation du produit pultrudé (1) dans laquelle la surface extérieure propice à la marche (2a) est agencée sur le dessus, chaque projection se développe sur plus de 70 pour cent de sa hauteur, ou complètement, au-dessus du plan idéal (P) ;
dans lequel lesdites projections (5) sont formées exclusivement de ladite résine polymérisable solidifiée et n'incluent pas de fibres de renfort ;
et éventuellement dans lequel la surface propice à la marche (2a) du produit pultrudé (1) présente deux ou plusieurs zones comprenant des projections (7) et lesdites deux ou plusieurs zones comprenant des projections sont mises en forme en bandes parallèles de projections émergeant de ladite/d'une surface de base plate.

15. Pavage (20) comprenant une pluralité de produits pultrudés (1) agencés côte à côte, dans lequel chacun des produits pultrudés est du type selon l'une quelconque des revendications 13 à 14
ou est fabriqué en utilisant le procédé selon l'une quelconque des revendications 1 à 12.
